# EUROPÄISCHE PATENTSCHRIFT

(11) **EP 2 402 183 B1**
(45) Veröffentlichungstag und Bekanntmachung des Hinweises auf die Patenterteilung: **06.09.2017**
(21) Anmeldenummer: 10290350.7
(22) Anmeldetag: 29.06.2010
(51) Int. Cl.: B60H 1/00

(54) **KRAFTFAHRZEUGKLIMAANLAGE**
Motor vehicle air conditioning
Climatisation de véhicule automobile

(43) Veröffentlichungstag der Anmeldung: 04.01.2012
(73) Patentinhaber: Mahle Behr France Rouffach S.A.S., 68250 Rouffach (FR)
(72) Erfinder: Klein, Henri, 68400 Riedisheim (FR); Fleith, Emmanuel, 68320 Holtzwihr (FR)
(74) Vertreter: Grauel, Andreas

(56) Entgegenhaltungen:
- EP-A1- 1 759 897
- EP-A1- 2 322 367
- EP-A2- 1 308 325
- DE-A1- 19 915 966
- US-A1- 2001 012 756

## Beschreibung

Die Erfindung betrifft eine Kraftfahrzeugklimaanlage gemäß dem Oberbegriff des Anspruches 1.

Kraftfahrzeugklimaanlagen dienen dazu, die dem Innenraum eines Kraftfahrzeuges zuzuführende Luft zu erwärmen und/oder zu kühlen. Die Kraftfahrzeugklimaanlagen sind mit verschiedenen als Luftklappen ausgebildeten Luftleiteinrichtungen versehen. Die Luftklappen dienen dabei z. B. zu steuern, ob dem Fahrzeuginnenraum Luft aus der Umgebung oder aus dem Fahrzeuginnenraum zugeführt wird. Diese Luftklappen werden als Umluftklappen bezeichnet Ferner weist die Kraftfahrzeugklimaanlage außerdem zusätzliche Luftklappen auf welche dazu dienen, die in den Fahrzeuginnenraum leitbare Menge an Luft zu steuern. Zum Bewegen der Luftklappen werden als Aktuatoren beispielweise Stellantriebe mit einem Getriebe und einem Elektromotor verwendet.

Als Umluftklappen werden sogenannten Fahnenklappen eingesetzt, welche an einer Rotationsachse nur einen Klappenflügel aufweisen. Beim Verschließen eines Frischluftkanals, in den eine Frischlufteinlassöffnung mündet, mit Hilfe der Fahnenklappe, wirkt auf diese Fahnenklappe bei einer hohen Fahrgeschwindigkeit eines Kraftfahrzeugs ein großer Staudruck. Da die Fahnenklappe nur einen Klappenflügel aufweist, entsteht damit an der Rotationsachse ein großes Drehmoment, der von einem Getriebe oder einem Stellantrieb aufgenommen werden muss. Deshalb kommt es zu Klapper-oder Pfeifgeräuschen und es ist eine nur unzureichende Abdichtung bei einem derart hohen Staudruck mit Hilfe dieser Fahnenklappe möglich.

Aus der EP 1 095 802 A1 ist eine Umluftklappe bekannt, welche als Trommelklappe ausgebildet ist. Die Trommelklappe benötigt jedoch in nachteiliger Weise einen großen Bauraum und ist für die Abdichtung von Frischluftkanälen mit einer wesentlich größeren Länge als Breite nur bedingt geeignet.

Die nachveröffentlichte EP 2 322 367 A1 zeigt eine Kraftfahrzeugklimaanlage gemäß Oberbegriff des Anspruchs 1.

Die Aufgabe der vorliegenden Erfindung besteht deshalb darin, eine Kraftfahrzeugklimaanlage mit einer Umluftklappe zur Verfügung zu stellen, bei der mit der Umluftklappe auch bei einem großen Staudruck ein im Querschnitt rechteckförmiger Frischluftkanal zuverlässig abgedichtet werden kann.

Diese Aufgabe wird gelöst mit einer Kraftfahrzeugklimaanfage, gemäß Anspruch 1.

In einer ergänzenden Ausführungsform weist die Kraftfahrzeugklimaanlage nur eine Umluftklappe auf. Erfindungsgemäß ist die Schmetterlingsklappe um eine Rotationsachse verschwenkbar gelagert und die Schmetterlingsklappe weist einen ersten Klappenflügel und einen zweiten Klappenflügel auf, vorzugsweise ist der erste und zweite Klappenflügel gegenüberliegend an der Rotationsachse ausgebildet. Die Schmetterlingsklappe weist den ersten und zweiten Klappenflügel auf und mit dem ersten und zweiten Klappenflügel sind in der Umluftstellung der Schmetterlingsklappe der Frischluftkanal verschlossen, sodass ein auf die Schmetterlingsklappe wirkender hoher Staudruck in dem Frischluftkanal sowohl auf den ersten Klappenflügel als auch auf den zweiten Klappenflügel aufwirkt und dadurch das an der Rotationsachse wirkende Drehmoment wenigstens teilweise aufgehoben ist, weil das auf den ersten Klappenflügel wirkende Drehmoment das auf den zweiten Klappenflügel wirkenden Drehmoment oder dem am zweiten Klappenflügel entstehenden oder wirkenden Drehmoment entgegengesetzt gerichtet ist. Auch in der Frischluftstellung der Schmetterlingsklappe ist von dem ersten und zweiten Klappenflügel der Umluftkanal verschlossen. Erfindungsgemäß sind eine von dem ersten Klappenflügel aufgespannte erste Ebene und eine von dem zweiten Klappenflügel aufgespannte zweite Ebene im Wesentlichen parallel zueinander ausgerichtet und vorzugsweise ist der Abstand der ersten Ebene von der zweiten Ebene senkrecht zu der ersten und/oder zweiten Ebene an der Schmetterlingsklappe kleiner als 3 cm oder 2 cm oder ist Null. Im Wesentlichen parallel zueinander gerichtet bedeutet erfindungsgemäß dass die erste Ebene und die zweite Ebene in einem Winkel von weniger als 30°, 20°, 10° oder 5° zueinander ausgerichtet sind, insbesondere in einem Schnitt senkrecht zu der Rotationsachse.

Zweckmäßig liegt das Verhältnis der Ausdehnung des ersten Klappenflügels in Richtung der ersten Ebene zu der Ausdehnung des zweiten Klappenflügels in Richtung der zweiten Ebene, jeweils in einem Schnitt senkrecht zu der Rotationsachse, zwischen 1 und 1,8, vorzugsweise zwischen 1 und 1,5.

Erfindungsgemäß sind der erste Klappenflügel und der zweite Klappenflügel gekrümmt ausgebildet.

In einer zusätzlichen Ausführungsform sind der erste Klappenflügels und/oder der zweite Klappenflügel in einem Schnitt senkrecht zu der Rotationsachse gekrümmt ausgebildet.

In einer zusätzlichen Variante sind der erste Klappenflügel und/oder der zweite Klappenflügel in einem Abstand zu der Rotationsachse ausgerichtet. Zweckmäßig liegt der Abstand zwischen 0,1 und 4 cm, insbesondere zwischen 0,5 und 3 cm. In einer zusätzlichen Ausgestaltung sind die erste Ebene und/oder die zweite Ebene in dem Abstand zu der Rotationsachse ausgerichtet.

In einer zusätzlichen Ausführungsform ist an dem ersten Klappenflügel und/oder an dem zweiten Klappenflügel eine erste und zweite Haltewandung ausgebildet und vorzugsweise ist die erste und zweite Haltewandung im Wesentlichen senkrecht zu der Rotationsachse ausgerichtet.

Vorzugsweise ist die Ausdehnung des Frischluftkanals senkrecht zu der Strömungsrichtung der Frischluft in dem Frischluftkanal in Richtung einer ersten Achse größer als in Richtung einer zweiten Achse und die erste und zweite Achse stehen senkrecht aufeinander. Dabei liegen vorzugsweise die erste und zweite Achse in einer Ebene, wobei die Ebene insbesondere senkrecht zu der Strömungsrichtung der Frischluft in dem Frischluftkanal und/oder einer Längsachse des Frischluftkanales ausgerichtet ist.

In einer ergänzenden Variante ist die Ausdehnung des Frischluftkanales in Richtung der ersten Achse wenigstens um das 2-, 3-, 5-, 7- oder 10-Fache größer als in Richtung der zweiten Achse und/oder der Frischluftkanal weist einen im Wesentlichen rechteckförmigen Querschnitt auf.

In einer zusätzlichen Ausgestaltung ist die erste Achse und die zweite Achse senkrecht zu der Strömungsrichtung der Frischluft ausgerichtet.

In einer weiteren Ausführungsform weist die Umluftklappe einen Dichtrand, z. B. einen Rand aus einem elastischen Material oder eine Schaumdichtung, auf. Der Dichtrand dient dazu, dass beim Anliegen der Umluftklappe an dem Gehäuse oder einer Wandung des Gehäuses eine im Wesentlichen vollständige Abdichtung mit Hilfe der Umluftklappe möglich ist.

In einer ergänzenden Ausführungsform ist die wenigstens eine Umluftklappe mittels einer Gleitlagerung mit dem Gehäuse verbunden.

In einer zusätzlichen Ausgestaltung umfasst die Kraftfahrzeugklimaanlage einen Aktuator, z. B. einen Elektromotor, und einen Mechanismus oder ein Getriebe und der Aktuator ist mit der Umluftklappe mechanisch (mittels des Mechanismus oder des Getriebes) verbunden, so dass die wenigstens eine Umluftklappe mittels des Mechanismus oder Getriebes von dem Aktuator bewegbar ist.

In einer weiteren Variante umfasst die Kraftfahrzeugklimaanlage ein Gebläse und/oder einen Kältemittelverdampfer und/oder eine Heizeinrichtung und/oder der Zuführungskanal mündet zu dem Gebläse und/oder den Kältemittelverdampfer und/oder die Heizeinrichtung.

In einer weiteren Ausführungsform weist der Kunststoff des Dichtrandes größere elastische Eigenschaften auf als der Kunststoff der wenigstens einen Luftklappe außerhalb des Dichtrandes, beispielsweise besteht der Dichtrand aus einem weichen Kunststoff und die übrige Luftklappe aus einem harten Kunststoff.

In einer Variante sind das Gehäuse und die wenigstens eine Luftklappe einstückig mit Spritzgießen, insbesondere aus Kunststoff, hergestellt.

In einer ergänzenden Ausgestaltung ist das Gehäuse und/oder die wenigstens eine Luftklappe aus thermoplastischen und/oder duroplastischen und/oder elastomeren Kunststoff hergestellt oder wird aus diesem hergestellt.

Zweckmäßig ist das Gehäuse der Kraftfahrzeugklimaanlage ein- oder mehrteilig.

In einer weiteren Ausgestaltung weist die Kraftfahrzeugklimaanlage wenigstens eine Luftklappe oder ein Rollo auf, um die Menge der durch einen Luftkanal leitbaren Menge an Luft zu steuern.

In einer zusätzlichen Ausgestaltung besteht das Gehäuse der Kraftfahrzeug-klimaanlage aus dem gleichen oder einem anderen Kunststoff als die wenigstens eine Luftklappe.

In einer weiteren Ausgestaltung ist der Aktuator ein Elektromotor oder ein Piezoelement.

Vorzugsweise weist die Kraftfahrzeugklimaanlage wenigstens einen Luftkanal zum Durchleiten von Luft auf.

Insbesondere besteht das Gehäuse der Kraftfahrzeugklimaanlage wenigstens teilweise aus Kunststoff.

Zweckmäßig sind der Frischluftkanal und/oder der Umluftkanal und/oder der Zuführungskanal von einer Wandung des Gehäuses begrenzt.

In einer weiteren Ausgestaltung weist der Aktuator eine Positionsermittlungseinrichtung zur Erfassung der Lage des Mechanismus, z. B. einer Welle, auf.

Insbesondere ist die Positionsermittlungseinheit mit einer Steuerungseinheit für die Kraftfahrzeugklimaanlage verbunden und mittels der von der Positionsermittlungseinheit erfassten Daten der Aktuator steuerbar zur Erzielung einer bestimmten Lage des Mechanismus bzw. der wenigstens einen Luftklappe.

Im Nachfolgenden werden Ausführungsbeispiele der Erfindung unter Bezugnahme auf die beigefügten Zeichnungen näher beschrieben. Es zeigt:
- Fig. 1: eine perspektivische Ansicht einer Kraftfahrzeugklimaanlage,
- Fig. 2: eine perspektivische Ansicht eines Teils eines Gehäuses der Kraftfahrzeugklimaanlage gemäß Fig. 1 mit einer Umluftklappe in einer Umluftstellung,
- Fig. 3: eine perspektivische Ansicht des Teils des Gehäuses der Kraftfahrzeugklimaanlage gemäß Fig. 1 mit der Umluftklappe in einer Frischluftstellung,
- Fig. 4: einen Schnitt des Teils des Gehäuses gemäß Fig. 3 senkrecht zu einer Rotationsachse der Umluftklappe und
- Fig. 5: einen Schnitt des Teils des Gehäuses gemäß Fig. 2 senkrecht zu einer Rotationsachse der Umluftklappe.

Kraftfahrzeugklimaanlagen 1 dienen dazu, die einem Fahrzeuginnenraum eines Kraftfahrzeuges zuzuführende Luft zu kühlen und/oder zu erwärmen. Hierzu weist die Kraftfahrzeugklimaanlage 1 ein Gehäuse 2 aus im Allgemeinen thermoplastischem Kunststoff auf. Das Gehäuse 2 ist mit Wandungen ausgebildet, welche auch einen Luftkanal, beispielsweise als Frischluftkanal 5, Umluftkanal 6 und/oder Zuführungsluftkanal 7, begrenzen. Durch den Luftkanal wird zu kühlende und/oder zu erwärmende Luft geleitet. Innerhalb des Luftkanales als Zuführungsluftkanal 7 sind außerdem ein nicht dargestellter Kältemittelverdampfer und eine nicht dargestellte Heizeinrichtung, beispielsweise eine elektrische Heizeinrichtung und/oder ein Wärmeübertrager, durch welchen Kühlmittel eines Verbrennungsmotors geleitet wird zur Übertragung von Wärme von dem Kühlmittel auf die durch den Luftkanal geleitete Luft. Das Gehäuse 1 dient ebenfalls zur Aufnahme eines Gebläses (nicht dargestellt).

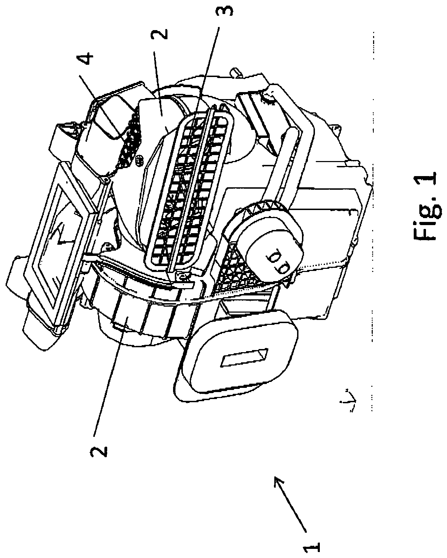

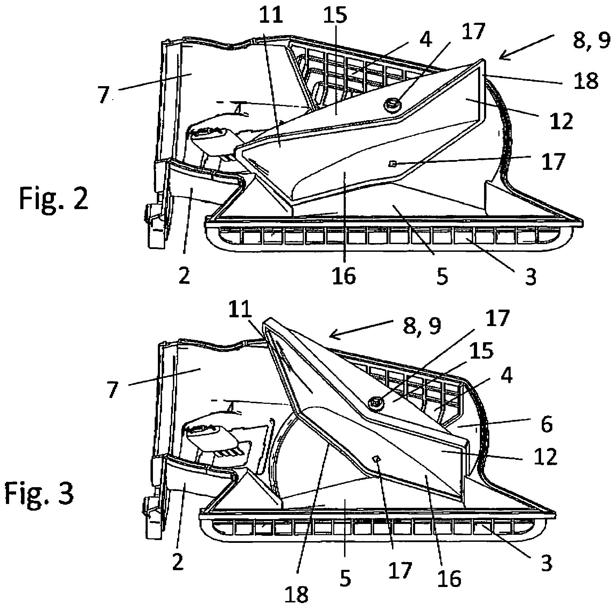

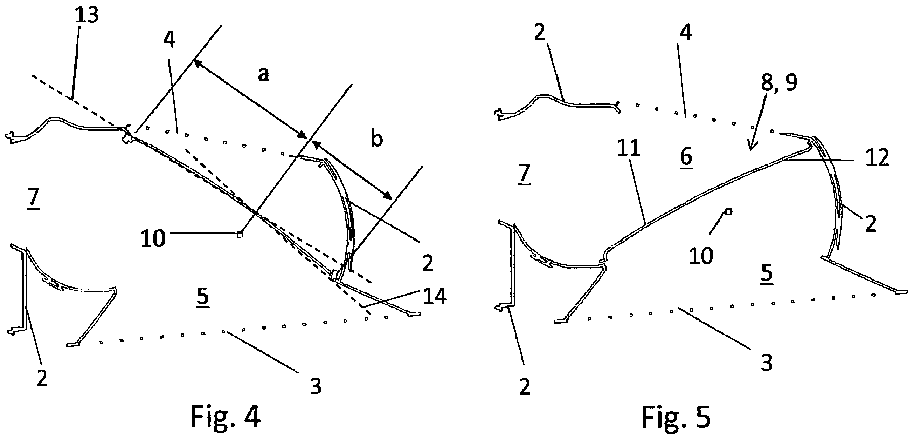

Das mehrteilige Gehäuse 2 weist eine Frischlufteinlassöffnung 3 und eine Umlufteinlassöffnung 4 auf (Fig. 1 bis 3). Die Frischlufteinlassöffnung 3 weist einen im Wesentlichen rechteckförmigen Querschnitt auf und dabei ist die Länge der Frischlufteinlassöffnung 3 wesentlich größer als die Höhe bzw. die Breite der Frischlufteinlassöffnung 3. In Fig. 2 und 3 ist ein Teil des Gehäuses 2 mit einer als Schmetterlingsklappe 9 ausgebildeten Umluftklappe 8 abgebildet. Die Frischlufteinlassöffnung 3 mündet in den Frischluftkanal 5 und die Umlufteinlassöffnung 4 mündet in den Umluftkanal 6. Sowohl der Frischluftkanal 5 als auch der Umluftkanal 6 münden in den Zuführungsluftkanal 7. Innerhalb des Gehäuses 2 der Kraftfahrzeug-Klimaanlage 1 ist die Schmetterlingsklappe 9 um eine Rotationsachse 10 verschwenkbar zwischen einer Frischluftstellung und einer Umluftstellung. Hierzu ist die Schmetterlingsklappe 9 als Umluftklappe 8 mittels zweier Lagerbolzen 17 an dem Gehäuse 2 als Gleitlagerung gelagert. In Fig. 2 und 5 ist die Umluftstellung der Umluftklappe 8 dargestellt. In der Umluftstellung der Umluftklappe 8 ist von der Umluftklappe 8 der Frischluftkanal 5 bzw. die Frischlufteinlassöffnung 3 verschlossen und die Umlufteinlassöffnung 4 bzw. der Umluftkanal 6 geöffnet. In dieser, in Fig. 2 und 5 dargestellten Umluftstellung der Umluftklappe 8 kann die Luft durch die Umlufteinlassöffnung 4 in den Zuführungskanal 7 strömen und durch die Frischlufteinlassöffnung 8 keine Luft in den Zuführungsluftkanal geleitet werden. Damit wird in den Fahrzeuginnenraum des Kraftfahrzeugs ausschließlich Umluft, das heißt Luft aus dem Fahrzeuginnenraum eingeleitet.

In der in Fig. 3 und 4 dargestellten Frischluftstellung der Umluftklappe 8 ist von der Umluftklappe 8 die Umlufteinlassöffnung 4 bzw. der Umluftkanal 6 verschlossen und die Frischlufteinlassöffnung 3 bzw. der Frischluftkanal 5 geöffnet. Dadurch kann in der Frischluftstellung der Umluftklappe 8 die Frischluft aus der Umgebung des Kraftfahrzeuges in den Zuführungskanal 7 eingeleitet werden, welche anschließend von einem Gebläse gefördert und optional an einem Kältemittelverdampfer gekühlt und/oder der Heizeinrichtung erwärmt wird vor dem Einleiten in den Fahrzeuginnenraum des Kraftfahrzeuges.

Die Schmetterlingsklappe 9 weist einen ersten Klappenflügel 11 und einen zweiten Klappenflügel 12 auf. Der erste Klappenflügel 11 spannt dabei im Wesentlichen eine erste Ebene 13 (Fig. 4) auf und der zweite Klappenflügel 12 spannt eine zweite Ebene 14 auf. In dem Schnitt gemäß Fig. 4 und 5 senkrecht zu der Rotationsachse 10 der Schmetterlingsklappe 9 weist der erste und zweite Klappenflügel 11, 12 ferner auch eine leichte Krümmung auf. Die erste und zweite Ebene 13, 14 liegt somit nicht vollständig innerhalb des ersten und zweiten Klappenflügels 11, 12, sondern befindet sich nur annähernd innerhalb des ersten und zweiten Klappenflügels 11, 12. Vorzugsweise ist dabei die erste Ebene 13 dahingehend in den ersten Klappenflügel 11 gelegt, dass ein Ende gemäß dem Schnitt in Fig. 4 des ersten Klappenflügels 11 an dem Gehäuse 2 und das Ende des ersten Klappenflügels 11 zum Beginn des zweiten Klappenflügels 12 die erste Ebene 13 schneidet und dies gilt ebenfalls für die zweite Ebene 14 an dem zweiten Klappenflügel 12. Die Ausdehnung des ersten Klappenflügels 11 in Richtung der ersten Ebene in dem Schnitt gemäß Fig. 4 ist in Fig. 4 mit a gekennzeichnet und die Ausdehnung des zweiten Klappenflügels 12 in Richtung der zweiten Ebene 14 in dem Schnitt senkrecht zur Rotationsachse 10 gemäß Fig. 4 in Fig. 4 ist mit b gekennzeichnet. Dabei ist das Verhältnis aus a und b größer als 1 und liegt im Bereich zwischen 1,2 und 1,4. Die Ausdehnung a des ersten Klappenflügels 11 ist damit größer als die Ausdehnung b des zweiten Klappenflügels 12.

Die Schmetterlingsklappe 9 weist ferner einen Dichtrand 18 aus einem elastischen Material auf und ferner sind an der Schmetterlingsklappe 9 eine erste Haltewandung 15 und eine zweite Haltewandung 16 ausgebildet (Fig. 2 und 3). An der ersten und zweiten Haltewandung 15, 16 ist jeweils ein Lagerbolzen 17 angeordnet, mittels dem die Schmetterlingsklappe 9 an dem Gehäuse 2 gelagert ist. Das Gehäuse 2 als auch die Schmetterlingsklappen 9 sind dabei mittels Spritzgießen aus Kunststoff hergestellt.

In der in Fig. 2 und 5 dargestellten Umluftstellung der Schmetterlingsklappe 9 bzw. der Umluftklappe 8 wirkt bei einer hohen Fahrgeschwindigkeit des Kraftfahrzeuges mit der Kraftfahrzeugkümaanlage 1 ein hoher Staudruck an der Schmetterlingsklappe 9. Dieser hohe Staudruck wirkt dabei sowohl auf den ersten Klappenflügel 11 als auch auf den zweiten Klappenflügel 12. Aufgrund der geometrischen Ausrichtung des ersten und zweiten Klappenflügels 11, 12 zu der Rotationsachse 10 bzw. den beiden Lagerbolzen 17 ist von den beiden Lagerbolzen 17 nur ein sehr geringes Drehmoment aufzunehmen, weil das geringfügig größere Drehmoment, welches an dem geringfügig größeren ersten Klappenflügel 11 entsteht, im Wesentlichen von dem an dem zweiten Klappenflügel 12 entstehende Drehmoment aufgehoben ist. Dadurch braucht auch bei hohen Fahrgeschwindigkeiten in der Umluftstellung gemäß Fig. 2 und 4, von einem Getriebe oder einem Mechanismus, der mit einem Aktuator verbunden ist, nur ein sehr geringes Drehmoment aufgenommen werden. Dadurch kann ein Klappern der Schmetterlingsklappe 9 in der Umluftstellung auch bei einem hohen, auf die Umluftklappe 8 wirkenden Staudruck vermieden werden und es ist ein zuverlässiges Abdichten auch bei einem hohen Staudruck des Frischluftkanals 5 gewährleistet.

Der erste und zweite Klappenflügel 11, 12 weist eine Krümmung auf. Dadurch ist in der Frischluftstellung (Fig. 3 und 4) ein größerer Strömungsweg der Frischluft von der Frischlufteinlassäffnung 3 zu dem Zuführungsluftkanal 7 möglich. In der in Fig. 2 und 5 dargestellten Umluftstellung der Umluftklappe 8 bedingt die Krümmung des ersten und zweiten Klappenflügels 11, 12 eine verkleinerte Strömungsquerschnittsfläche der Umluft, welche durch die Umlufteinlassöffnung 4 zu dem Zuführungsluftkanal 7 geleitet ist. Beim Ansaugen von Umluft aus dem Fahrzeuginnenraum in der Umluftstellung der Schmetterlingsklappe 9 treten insgesamt aufgrund des kürzeren Strömungsweges geringere Strömungswiderstände auf, sodass die verkleinerte Strömungsquerschnittsfläche der Umluft in der Umluftstellung der Schmetterlingsklappe 9 gewünscht ist. Bei einem Stillstand des Kraftfahrzeugs und einem Ansaugen von Frischluft mittels des Gebläses durch die Frischlufteinlassöffnung 3 treten größere Strömungswege und damit Widerstände der Luft auf, sodass in der in Fig. 3 und 4 dargestellten Frischluftstellung der Umluftklappe 8 eine größere Strömungsquerschnittsfläche erwünscht und auch möglich ist, aufgrund der Krümmung des ersten und zweiten Klappenflügels 11, 12.

Insgesamt betrachtet sind mit der erfindungsgemäßen Kraftfahrzeugklimaanlage 1 wesentliche Vorteile verbunden. Die als Schmetterlingsklappe 9 ausgebildete Umluftklappe 8 ermöglicht es, auch bei einem hohen, auf die Umluftklappe 8 wirkenden Staudruck in einer Umluftstellung, den Frischluftkanal 5 zuverlässig und ohne Klappern abzudichten. Die Rotationsachse 10 der Schmetterlingsklappe 9 ist dabei im Wesentlichen, das heißt mit einer Abweichung von weniger als 30°, 20°, 10° oder 5°, parallel zu der zweiten Achse an dem Frischluftkanal 5 ausgerichtet. Die erste Achse und die zweite Achse stehen dabei aufeinander senkrecht und die erste Achse gibt die Richtung der Ausdehnung des Frischluftkanals 5 oder der Frischlufteinlassöffnung 3 in einer Richtung an, in der diese Ausdehnung größer ist als in Richtung der zweiten Achse. Die erste Achse entspricht somit bei einer im Wesentlichen rechteckförmigen Querschnittsform der Frischlufteinlassöffnung 3 oder des Frischluftkanals 5 der Richtung der Länge und die zweite Achse gibt die Richtung der Höhe oder Breite an.

### Bezugszeichenliste

- 1: Kraftfahrzeugklimaanlage
- 2: Gehäuse
- 3: Frischlufteinlassöffnung
- 4: Umlufteinlassöffnung
- 5: Frischluftkanal
- 6: Umluftkanal
- 7: Zuführungsluftkanal
- 8: Umluftklappe
- 9: Schmetterlingsklappe
- 10: Rotationsachse
- 11: Erster Klappenflügel
- 12: Zweiter Klappenflügel
- 13: Erste Ebene
- 14: Zweite Ebene
- 15: Erste Haltewandung
- 16: Zweite Haltewandung
- 17: Lagerbolzen
- 18: Dichtrand

## Patentansprüche

1. Kraftfahrzeugklimaanlage (1), umfassend
- ein Gehäuse (2),
- einen Frischluftkanal (5) zum Durchleiten von Frischluft aus einer Umgebung eines Kraftfahrzeuges,
- einen Umluftkanal (6) zum Durchleiten von Umluft aus einem Innenraum des Kraftfahrzeuges,
- einen Zuführungsluftkanal (7) zum Durchleiten von Frischluft und/oder von Umluft,
- wenigstens eine verschwenkbare Umluftklappe (8), welche in einer Frischluftstellung den Umluftkanal (6) verschließt und der Frischluftkanal (5) geöffnet ist und in einer Umluftstellung den Frischluftkanal (5) verschließt und der Umluftkanal (6) geöffnet ist,
**dadurch gekennzeichnet, dass**
die Umluftklappe (8) als eine zweiflüglige Schwenkklappe mit von einer Luftleitfläche beabstandeten Rotationsachse ausgebildet ist, die um eine Rotationsachse (10) verschwenkbar gelagert ist und einen ersten Klappenflügel (11) und einen zweiten Klappenflügel (12) aufweist, wobei eine von dem ersten Klappenflügel (11) aufgespannte erste Ebene (13) und eine von dem zweiten Klappenflügel (12) aufgespannte zweite Ebene (14) in einem Winkel von weniger als 30°, 20°, 10° oder 5° zueinander ausgerichtet sind und der erste Klappenflügel (11) und der zweite Klappenflügel (12) gekrümmt ausgebildet sind und vorzugsweise der Abstand der ersten Ebene (13) von der zweiten Ebene (14) senkrecht zu der ersten und/oder zweiten aufgespannten Ebene (13, 14) an der Klappe (9) kleiner als 3 cm oder 2 cm ist oder Null ist.

2. Kraftfahrzeugklimaanlage nach Anspruch 1,
**dadurch gekennzeichnet, dass**
das Verhältnis der Ausdehnung des ersten Klappenflügels (11) in Richtung der ersten Ebene (13) zu der Ausdehnung des zweiten Klappenflügels (12) in Richtung der zweiten Ebene (14), jeweils in einem Schnitt senkrecht zu der Rotationsachse (10), zwischen 1 und 1,8, vorzugsweise zwischen 1 und 1,5, liegt.

3. Kraftfahrzeugklimaanlage nach Anspruch 1 oder 2,
**dadurch gekennzeichnet, dass**
der erste Klappenflügel (11) und/oder der zweite Klappenflügel (12) in einem Schnitt senkrecht zu der Rotationsachse (10) gekrümmt ausgebildet sind.

4. Kraftfahrzeugklimaanlage nach einem oder mehreren der Ansprüche 1 bis 3,
**dadurch gekennzeichnet, dass**
der erste Klappenflügel (11) und/oder der zweite Klappenflügel (12) in einem Abstand zu der Rotationsachse (10) ausgerichtet sind.

5. Kraftfahrzeugklimaanlage nach einem oder mehreren der Ansprüche 1 bis 4,
**dadurch gekennzeichnet, dass**
an dem ersten Klappenflügel (11) und/oder an dem zweiten Klappenflügel (12) eine erste und zweite Haltewandung (15,16) ausgebildet ist und vorzugsweise die erste und zweite Haltewandung (15, 16) im Wesentlichen senkrecht zu der Rotationsachse (10) ausgerichtet ist.

6. Kraftfahrzeugkümaanfage nach einem oder mehreren der vorhergehenden Ansprüche,
**dadurch gekennzeichnet, dass**
die Ausdehnung des Frischluftkanales (5) senkrecht zu der Strömungsrichtung der Frischluft in dem Frischluftkanal (5) in Richtung einer ersten Achse größer ist als in Richtung einer zweiten Achse und die erste und zweite Achse senkrecht aufeinander stehen.

7. Kraftfahrzeugklimaanlage nach Anspruch 6,
**dadurch gekennzeichnet, dass**
die Ausdehnung des Frischluftkanales (5) in Richtung der ersten Achse wenigstens um das 2-, 3-, 5-, 7- oder 10-Fache größer ist als in Richtung der zweiten Achse
und/oder
der Frischluftkanal (5) einen im Wesentlichen rechteckförmigen Querschnitt aufweist.

8. Kraftfahrzeugklimaanlage nach einem oder mehreren der vorhergehenden Ansprüche,
**dadurch gekennzeichnet, dass**
die Umluftklappe (8) einen Dichtrand (18), z. B. einen Rand aus einem elastischen Material oder eine Schaumdichtung, aufweist.

9. Kraftfahrzeugklimaanlage nach einem oder mehreren der vorhergehenden Ansprüche,
**dadurch gekennzeichnet, dass**
die wenigstens eine Umluftklappe (8) mittels einer Gleitlagerung mit dem Gehäuse (2) verbunden ist.

10. Kraftfahrzeugklimaanlage nach einem oder mehreren der vorhergehenden Ansprüche,
**dadurch gekennzeichnet, dass**
die Kraftfahrzeugklimaanlage (1) einen Aktuator, wie einen Elektromotor oder einen mechanischen Bedienschalter, und einen Mechanismus, wie ein Getriebe oder einen Bowdenzug, umfasst und der Aktuator mit der Umluftklappe (8) mechanisch verbunden ist, so dass die wenigstens eine Umluftklappe (8) mittels des Mechanismus von dem Aktuator bewegbar ist.

11. Kraftfahrzeugkümaanfage nach einem oder mehreren der vorhergehenden Ansprüche,
**dadurch gekennzeichnet, dass**
die Kraftfahrzeugklimaanlage (1) ein Gebläse und/oder einen Kältemittelverdampfer und/oder eine Heizeinrichtung umfasst und/oder
der Zuführungskanal (7) zu dem Gebläse und/oder den Kältemittelverdampfer und/oder die Heizeinrichtung mündet.

## Claims

1. A vehicle air-conditioning system (1), comprising
- a housing (2),
- a fresh air channel (5) for conveying fresh air from an environment of a motor vehicle,
- a circulating air channel (6) for conveying circulating air from an interior of the motor vehicle,
- a supply air channel (7) for conveying fresh air and/or circulating air,
- at least one pivotable circulating air flap (8) which closes the circulating air channel (6) in a fresh air position and the fresh air channel (5) is opened and closes the fresh air channel (5) in a circulating air position and the circulating air channel (6) is opened,
**characterised in that**
the circulating air flap (8) is formed as a two-winged swivelling flap with a rotation axis which is spaced apart by an air guide surface, pivotably mounted about a rotation axis (10) and having a first flap wing (11) and a second flap wing (12), wherein a first plane (13) spanned by the first flap wing (11) and a second plane (14) spanned by the second flap wing (12) are arranged towards one another in an angle of less than 30°, 20°, 10° or 5° and the first flap wing (11) and the second flap wing (12) are formed in a curved manner and preferably the distance of the first plane (13) to the second plane (14) perpendicular to the first and/or second spanned plane (13, 14) on the flap (9) is less than 3 cm or 2 cm or is zero.

2. The vehicle air-conditioning system according to claim 1,
**characterised in that**
the ratio of the extension of the first flap wing (11) in the direction of the first plane (13) to the extension of the second flap wing (12) in the direction of the second plane (14), respectively in a section perpendicular to the rotation axis (10), is between 1 and 1.8, preferably between 1 and 1.5.

3. The vehicle air-conditioning system according to claim 1 or 2,
**characterised in that**
the first flap wing (11) and/or the second flap wing (12) is formed in a curved manner in a section perpendicular to the rotation axis (10).

4. The vehicle air-conditioning system according to one or more of claims 1 to 3,
**characterised in that**
the first flap wing (11) and/or the second flap wing (12) are oriented at a distance to the rotation axis (10).

5. The vehicle air-conditioning system according to one or more of claims 1 to 4,
**characterised in that**
a first and a second holder wall (15, 16) is formed on the first flap wing (11) and/or on the second flap wing (12) and preferably the first and second holder wall (15, 16) are oriented substantially perpendicular to the rotation axis (10).

6. The vehicle air-conditioning system according to one or more of the preceding claims,
**characterised in that**
the extension of the fresh air channel (5) perpendicular to the flow direction of the fresh air in the fresh air channel (5) is greater in the direction of a first axis than in the direction of a second axis and the first and second axis are perpendicular to each other.

7. The vehicle air-conditioning system according to claim 6,
**characterised in that**
the extension of the fresh air channel (5) in the direction of the first axis is at least 2, 3, 5, 7 or 10 times greater than in the direction of the second axis
and/or
the fresh air channel (5) has a substantially rectangular cross-section.

8. The vehicle air-conditioning system according to one or more of the preceding claims,
**characterised in that**
the circulating air flap (8) has a sealing edge (18), e.g. an edge made from an elastic material, or a foam seal.

9. The vehicle air-conditioning system according to one or more of the preceding claims,
**characterised in that**
the at least one circulating air flap (8) is connected to the housing (2) by means of a plain bearing.

10. The vehicle air-conditioning system according to one or more of the preceding claims,
**characterised in that**
the vehicle air-conditioning system (1) comprises an actuator, such as an electric motor or a mechanical operating switch, and a mechanism, such as a gear or a Bowden cable, and the actuator is mechanically connected to the circulating air flap (8), so that the at least one circulating air flap (8) is movable by the actuator by means of the mechanism.

11. The vehicle air-conditioning system according to one or more of the preceding claims,
**characterised in that**
the vehicle air-conditioning system (1) comprises a fan and/or a refrigerant evaporator and/or a heating device
and/or
the supply channel (7) ends in the fan and/or the refrigerant evaporator and/or the heating device.

## Revendications

1. Système de climatisation (1) d'un véhicule automobile, comprenant
- un carter (2),
- un conduit d'air frais (5) servant à la circulation d'air frais provenant d'un environnement d'un véhicule automobile,
- un conduit d'air recyclé (6) servant à la circulation d'air recyclé provenant d'un habitacle du véhicule automobile,
- un conduit d'air d'alimentation (7) servant à la circulation d'air frais et / ou d'air recyclé,
- au moins un volet d'air recyclé (8), pivotant, qui, dans une position d'air frais, ferme le conduit d'air recyclé (6), et le conduit d'air frais (5) est ouvert et, dans une position d'air recyclé, ferme le conduit d'air frais (5), et le conduit d'air recyclé (6) est ouvert,
**caractérisé**
**en ce que** le volet d'air recyclé (8) est conçu comme un volet pivotant à deux ailes, ledit volet comprenant un axe de rotation situé à distance d'une surface déflectrice d'air, volet d'air recyclé qui est monté de manière à pouvoir pivoter autour d'un axe de rotation (10) et qui présente une première aile de volet (11) et une seconde aile de volet (12), où un premier plan (13) défini par la première aile de volet (11) et un second plan (14) défini par la seconde aile de volet (12) sont orientés l'un par rapport à l'autre suivant un angle inférieur à 30°, à 20°, à 10° ou à 5°, et la première aile de volet (11) et la seconde aile de volet (12) sont configurées de façon courbée et, de préférence, la distance du premier plan (13), par rapport au second plan (14), perpendiculairement au premier et / ou au second plan définis (13, 14) sur le volet (9), est inférieure à 3 cm ou 2 cm ou est nulle.

2. Système de climatisation d'un véhicule automobile selon la revendication 1,
**caractérisé**
**en ce que** le rapport de l'étendue de la première aile de volet (11) dans la direction du premier plan (13), relativement à l'étendue de la seconde aile de volet (12) dans la direction du second plan (14), se situe respectivement, suivant une coupe perpendiculaire à l'axe de rotation (10), entre 1 et 1,8, de préférence entre 1 et 1,5.

3. Système de climatisation d'un véhicule automobile selon la revendication 1 ou 2,
**caractérisé**
**en ce que** la première aile de volet (11) et / ou la seconde aile de volet (12), suivant une coupe perpendiculaire à l'axe de rotation (10), sont configurées de façon courbée.

4. Système de climatisation d'un véhicule automobile selon l'une quelconque ou plusieurs des revendications 1 à 3,
**caractérisé**
**en ce que** la première aile de volet (11) et / ou la seconde aile de volet (12) sont orientées en étant à distance par rapport à l'axe de rotation (10).

5. Système de climatisation d'un véhicule automobile selon l'une quelconque ou plusieurs des revendications 1 à 4,
**caractérisé**
**en ce qu'**une première et une seconde paroi de support (15, 16) sont configurées sur la première aile de volet (11) et / ou sur la seconde aile de volet (12) et, de préférence, la première et la seconde paroi de support (15, 16) sont orientées pratiquement de façon perpendiculaire à l'axe de rotation (10).

6. Système de climatisation d'un véhicule automobile selon l'une quelconque ou plusieurs des revendications précédentes,
**caractérisé**
**en ce que** l'étendue du conduit d'air frais (5), perpendiculairement à la direction d'écoulement de l'air frais dans le conduit d'air frais (5), est plus grande dans la direction d'un premier axe que dans la direction d'un second axe, et les premier et second axes sont perpendiculaires l'un par rapport à l'autre.

7. Système de climatisation d'un véhicule automobile selon la revendication 6,
**caractérisé**
**en ce que** l'étendue du conduit d'air frais (5) dans la direction du premier axe est au moins 2, 3, 5, 7 ou 10 fois plus grande que dans la direction du second axe
et / ou
le conduit d'air frais (5) présente une section pratiquement de forme rectangulaire.

8. Système de climatisation d'un véhicule automobile selon l'une quelconque ou plusieurs des revendications précédentes,
**caractérisé**
**en ce que** le volet d'air recyclé (8) présente un bord d'étanchéité (18), par exemple un bord se composant d'un matériau élastique, et / ou un joint d'étanchéité en mousse.

9. Système de climatisation d'un véhicule automobile selon l'une quelconque ou plusieurs des revendications précédentes,
**caractérisé**
**en ce que** le volet d'air recyclé (8) au moins au nombre de un est assemblé avec le carter (2) au moyen d'un palier à glissement.

10. Système de climatisation d'un véhicule automobile selon l'une quelconque ou plusieurs des revendications précédentes,
**caractérisé**
**en ce que** le dispositif de climatisation (1) d'un véhicule automobile comprend un actionneur, tel qu'un moteur électrique ou un commutateur de commande mécanique, et comprend un mécanisme, tel qu'un engrenage ou une transmission Bowden, et l'actionneur est relié mécaniquement au volet d'air recyclé (8), de sorte que le volet d'air recyclé (8) au moins au nombre de un peut être déplacé par l'actionneur, au moyen du mécanisme.

11. Système de climatisation d'un véhicule automobile selon l'une quelconque ou plusieurs des revendications précédentes,
**caractérisé**
**en ce que** le système de climatisation (1) d'un véhicule automobile comprend un ventilateur et / ou un évaporateur de fluide frigorigène et / ou un dispositif de chauffage
et / ou
le conduit d'alimentation (7) débouche dans le ventilateur et / ou dans l'évaporateur de fluide frigorigène et / ou dans le dispositif de chauffage.
